(19) Europäisches Patentamt
European Patent Office
Office européen des brevets

(11) **EP 3 542 313 B1**

(12) # EUROPÄISCHE PATENTSCHRIFT

(45) Veröffentlichungstag und Bekanntmachung des Hinweises auf die Patenterteilung:
**18.10.2023 Patentblatt 2023/42**

(21) Anmeldenummer: **17805119.9**

(22) Anmeldetag: **08.11.2017**

(51) Internationale Patentklassifikation (IPC):
**G06N 3/063** (2023.01) **G06N 3/045** (2023.01)
**G06N 3/0495** (2023.01) G06N 3/047 (2023.01)

(52) Gemeinsame Patentklassifikation (CPC):
**G06N 3/063; G06N 3/045; G06N 3/0495;**
G06N 3/047

(86) Internationale Anmeldenummer:
**PCT/EP2017/078621**

(87) Internationale Veröffentlichungsnummer:
**WO 2018/091333 (24.05.2018 Gazette 2018/21)**

(54) **VERFAHREN ZUM BERECHNEN EINER AUSGABE EINES NEURONALEN NETZES**

METHOD FOR CALCULATING THE OUTPUT OF A NEURAL NETWORK

MÉTHODE POUR CALCULER LA SORTIE D'UN RÉSEAU NEURONAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2016 DE 102016222814**

(43) Veröffentlichungstag der Anmeldung:
**25.09.2019 Patentblatt 2019/39**

(73) Patentinhaber: **Robert Bosch GmbH**
**70442 Stuttgart (DE)**

(72) Erfinder:
• **SCHORN, Christoph**
**71229 Leonberg (DE)**
• **VOGEL, Sebastian**
**76744 Schaidt (DE)**

(56) Entgegenhaltungen:
**DE-C1- 4 404 974**

• **SUYOG GUPTA ET AL: "Deep Learning with Limited Numerical Precision", ARXIV.ORG, CORNELL UNIVERSITY LIBRARY, 201 OLIN LIBRARY CORNELL UNIVERSITY ITHACA, NY 14853, 9. Februar 2015 (2015-02-09), XP080677454,**

• **Matthieu Courbariaux ET AL: "BinaryConnect: Training Deep Neural Networks with binary weights during propagations", , 1. November 2015 (2015-11-01), Seiten 1-9, XP055447419, Gefunden im Internet: URL:https://arxiv.org/pdf/1511.00363.pdf [gefunden am 2018-02-02] in der Anmeldung erwähnt**
• **HWANG KYUYEON ET AL: "Fixed-point feedforward deep neural network design using weights +1, 0, and", 2014 IEEE WORKSHOP ON SIGNAL PROCESSING SYSTEMS (SIPS), IEEE, 20. Oktober 2014 (2014-10-20), Seiten 1-6, XP032709384, DOI: 10.1109/SIPS.2014.6986082 [gefunden am 2014-12-15]**
• **KHAN A H ET AL: "Integer-weight neural nets", ELECTRONICS LET, IEE STEVENAGE, GB, Bd. 30, Nr. 15, 21. Juli 1994 (1994-07-21) , Seiten 1237-1238, XP006000811, ISSN: 0013-5194, DOI: 10.1049/EL:19940817**
• **SEBASTIAN VOGEL ET AL: "Efficient Stochastic Inference of Bitwise Deep Neural Networks", ARXIV.ORG, CORNELL UNIVERSITY LIBRARY, 201 OLIN LIBRARY CORNELL UNIVERSITY ITHACA, NY 14853, 20. November 2016 (2016-11-20), XP080733355,**

**Beschreibung**

Die vorliegende Erfindung betrifft ein Verfahren und eine Vorrichtung zum Berechnen einer Ausgabe eines neuronalen Netzes.

Stand der Technik

Die Druckschrift SUYOG GUPTA ET AL: "Deep Learning with Limited Numerical Precision", ARXIV.ORG, CORNELL UNIVERSITY LIBRARY, 201 OLIN LIBRARY CORNELL UNIVERSITY ITHACA, NY 14853, 9. Februar 2015 (2015-02-09), beschreibt ein Verfahren zum Trainieren eines neuronalen Netzwerks, bei welchem die Auswirkung von Datenrepräsentation und -berechnung mit begrenzter Genauigkeit auf das neuronale Netzwerktraining untersucht werden.

Die Druckschrift M. Courbariaux, Y. Bengio and J.-P. David, "BinaryConnect: Training Deep Neural Networks with Binary Weights During Propagations," in 29th Annual Conference on Neural Information Processing Systems, Montreal, Canada, 2015 beschreibt ein Verfahren, bei dem die hochpräzisen, beispielsweise mit 32-Bit-Gleitkommapräzision aufgelösten Kantengewichte eines künstlichen neuronalen Netzes für jeden Trainingsschritt auf binäre Gewichtungsfaktoren projiziert werden, welche die Werte +1 und -1 annehmen können, um den Trainingsvorgang durch Komplexitätsreduktion mittels Additionen und Subtraktionen statt Multiplikationen zu beschleunigen.

Die Druckschrift DE 44 049 74 C1 betrifft ein Verfahren, das eine angeordnete Hardwareschaltung befähigt, ein neuronales Netz zu realisieren. Das Verfahren ist dadurch gekennzeichnet, dass die in den Phasen des Netzes benötigten aufwendigen arithmetischen Operationen, die durch Programmierung eines Universalrechners realisiert wurden, durch stochastische Rechenverfahren ersetzt werden.

Die Druckschrift DE 103 17 384 A1 betrifft ein Verfahren der Computertomographie. Eine Online-Rekonstruktion von tomographischen Bildern kann auch unter Verwendung eines Lösungsansatzes basierend auf oder ähnlich dem Robbins-Monro-Algorithmus erreicht werden

Die Druckschrift US 5,926,804 A betrifft ein neuronales Netzwerk und ein Verfahren zum Trainieren des neuronalen Netzwerkes. Das Netzwerk umfasst einen Satz verborgener Knoten mit zugehörigen Gewichten.

Die Druckschrift US 6,064,997 betrifft eine Familie neuer Mehrschicht-Diskretzeit-Controllern neuronaler Netze zur Steuerung eines dynamischen Multieingangs-Multiausgangssystems (MIMO-System). Es ist keine Lernphase erforderlich.

Offenbarung der Erfindung

Die gradient-basierten Anpassungen der Kantengewichte werden mit den binarisierten Kantengewichten berechnet, aber auf die hochpräzisen Kantengewichte angewendet. Bei der anschließenden Verwendung des auf diese Weise trainierten Netzes mit den Kantengewichten kann ebenfalls eine Projektion auf binarisierte Kantengewichte durchgeführt werden. Dabei wird eine vergleichsweise geringe Verschlechterung der Klassifikationsgenauigkeit im Gegensatz zu Netzen erreicht, die mit anderen Trainingsverfahren trainiert und anschließend binarisiert werden.

Die binarisierten Kantengewichte benötigen im Vergleich zu Kantengewichten im 32-Bit-Gleitkommaformat 32-mal weniger Speicher, was Vorteile im Hinblick auf Speicherbedarf, Energieverbrauch und Ausführungsgeschwindigkeit bei einer Umsetzung dieser Netze auf spezieller Hardware ermöglicht. Eine Abbildungsmethode für die Projektion von Kantengewichten umfasst ein Clipping auf ein bestimmtes Intervall, das von stochastischem Runden gefolgt wird. Stochastisches Runden oder Projizieren bedeutet in diesem Fall, dass ein Wert auf die nächstgelegene ganze Zahl mit einer Wahrscheinlichkeit gerundet wird, die vom Abstand zu dieser Zahl abhängt.

Mit der Gegenwahrscheinlichkeit wird die Zahl auf die in entgegengesetzter Richtung liegende nächste Ganzzahl gerundet.

Stochastisch diskretisierte Kantengewichte können zur Ausführungszeit des trainierten Netzes verwendet werden, indem durch stochastisches Runden der Kantengewichte zunächst mehrere verschiedene Netze erzeugt werden und diese anschließend als Ensemble für eine Klassifikation verwendet werden.

Ein erster Aspekt betrifft ein Verfahren gemäß Anspruch 1 zum Berechnen einer Ausgabe eines neuronalen Netzes, mit den Schritten eines Erzeugens eines ersten neuronalen Netzes mit diskreten Kantengewichten aus einem neuronalen Netz mit präzisen Kantengewichten durch stochastisches Runden mittels eines als Hardware-Schaltung gebildeten und als Pseudo-Zufallszahlen-Generator ausgestalteten Multiplexers; eines Erzeugens eines zweiten neuronalen Netzes mit diskreten Kantengewichten aus dem neuronalen Netz mit präzisen Kantengewichten durch stochastisches Runden mittels eines als Hardware-Schaltung gebildeten und als Pseudo-Zufallszahlen-Generator ausgestalteten Multiplexers; und eines Berechnens einer Ausgabe durch Addieren der Ausgabe des ersten neuronalen Netzes und des zweiten neuronalen Netzes. Durch das Verfahren wird eine hoch-performante Ausgabe mit wenigen Rechenschritten erreicht. Zudem kann die Performanz auch gegenüber einem Netz mit hochpräzisen Kantengewichten gesteigert werden. Bei dem Schritt des Addierens werden die Einzelergebnisse des ersten und zweiten neuronalen Netzes addiert.

Ein weiterer Aspekt betrifft die Verwendung des Verfahrens gemäß Anspruch 10. Die Verwendung des Verfahrens in einem der genannten Steuergeräte hat den Vorteil, dass hierdurch eine für die auf dem Steuergerät ausgeführten Rechenschritte benötigte Rechenleistung reduziert werden kann. Dies spart sowohl Energie als auch Bauraum ein.

In einer technisch vorteilhaften Ausführungsform des Verfahrens wird bei einem Berechnen der Ausgabe des zweiten neuronalen Netzes auf Zwischenergebnisse bei dem Berechnen des ersten neuronalen Netzes zurückgegriffen. Dadurch wird beispielsweise ebenfalls der technische Vorteil erreicht, dass eine Berechnung der Ausgabe des zweiten neuronalen Netzes beschleunigt wird und der Energieverbrauch der zweiten Berechnung reduziert werden kann. Dabei kann eine gezielte Auswahl von Zwischenergebnissen durchgeführt werden, die bei der zweiten Berechnung zum gleichen Zwischenergebnis kommen und daher redundant sind.

In einer weiteren technisch vorteilhaften Ausführungsform des Verfahrens werden die präzisen Kantengewichte bei einer Forward-Propagation stochastisch auf die diskreten Kantengewichte des ersten und/oder zweiten neuronale Netzes projiziert. Dadurch wird beispielsweise der technische Vorteil erreicht, dass sich die neuronalen Netze mit diskreten Kantengewichten schnell sukzessive berechnen lassen.

In einer weiteren technisch vorteilhaften Ausführungsform des Verfahrens sind die präzisen Kantengewichte auf einen Wertebereich beschränkt. Dadurch wird beispielsweise der technische Vorteil erreicht, dass die Genauigkeit des Verfahrens verbessert wird.

In einer weiteren technisch vorteilhaften Ausführungsform des Verfahrens wird die Ausgabe des ersten neuronalen Netzes und/oder des zweiten neuronalen Netzes in einem Zwischenspeicher gespeichert. Dadurch wird beispielsweise der technische Vorteil erreicht, dass bei der Berechnung des zweiten Netzes auf Zwischenergebnisse des ersten zurückgegriffen und somit die Berechnungsgeschwindigkeit erhöht und der Energiebedarf gesenkt werden kann.

In einer weiteren technisch vorteilhaften Ausführungsform des Verfahrens ist der Zwischenspeicher ein RAM (Random Access Memory) oder Cache-Speicher eines Prozessors oder eines dedizierten Hardwarebeschleunigers. Dadurch wird beispielsweise der technische Vorteil erreicht, dass sich die Berechnungsgeschwindigkeit erhöht und der Energiebedarf gesenkt wird.

In der erfindungsgemäßen Ausführungsform des Verfahrens wird das stochastische Runden mittels eines Multiplexers durchgeführt. Dadurch wird beispielsweise ebenfalls der technische Vorteil erreicht, dass sich die Berechnungsgeschwindigkeit erhöht, dazu weniger Hardware-Logik benötigt wird als bei anderen Rundungsmethoden und entsprechend der Energiebedarf gesenkt werden kann.

In der erfindungsgemäßen Ausführungsform des Verfahrens ist der Multiplexer durch eine Hardware-Schaltung gebildet. Dadurch wird beispielsweise ebenfalls der technische Vorteil erreicht, dass sich die Berechnungsgeschwindigkeit verbessert, dazu weniger Hardware-Logik benötigt wird als bei anderen Rundungsmethoden und entsprechend der Energiebedarf gesenkt werden kann.

In einer weiteren technisch vorteilhaften Ausführungsform des Verfahrens werden bei der Erzeugung des ersten oder zweiten neuronalen Netzes lediglich die präzisen Kantengewichte vorausgewählter Schichten auf diskrete Kantengewichte projiziert. Dadurch wird beispielsweise ebenfalls der technische Vorteil erreicht, dass sich die neuronalen Netze mit den diskreten Kantengewichten schneller erzeugen lassen.

In der erfindungsgemäßen Ausführungsform des Verfahrens werden weitere neuronale Netze mit diskreten Kantengewichten auf Basis einer Genauigkeitsanforderung der Ausgabe aus dem neuronalen Netz mit präzisen Kantengewichten erzeugt und bei der Addition berücksichtigt. Dadurch wird beispielsweise ebenfalls der technische Vorteil erreicht, dass sich die Genauigkeit der Ausgabe je nach Anforderung steigern lässt.

Ein zweiter Aspekt betrifft ein Computerprogramm gemäß Anspruch 7, das in den Speicher eines digitalen Computers geladen werden kann und das Softwarecodeabschnitte umfasst, mit denen das Verfahren nach dem ersten Aspekt durch den Computer mit einem als Hardware-Schaltung gebildeten und als Pseudo-Zufallszahlen-Generator ausgestalteten Multiplexer ausgeführt wird, wenn das Computerprogramm auf einem Computer läuft. Durch das Computerprogramm werden die gleichen technischen Vorteile wie durch Verfahren nach dem ersten Aspekt erreicht.

Ein dritter Aspekt betrifft ein maschinenlesbares Speichermedium gemäß Anspruch 8, auf dem das Computerprogramm nach dem zweiten Aspekt gespeichert ist.

Ein vierter Aspekt betrifft eine Vorrichtung gemäß Anspruch 9, umfassend einen Computer mit einem als Hardware-Schaltung gebildeten und als Pseudo-Zufallszahlen-Generator ausgestalteten Multiplexer, wobei die Vorrichtung eingerichtet ist, das Verfahren nach dem ersten Aspekt auszuführen.

Ausführungsbeispiele der Erfindung sind in den Zeichnungen dargestellt und in der nachfolgenden Beschreibung näher erläutert.

Es zeigen:

Fig. 1     einen prinzipiellen Aufbau neuronaler Netze;

Fig. 2       ein Vorgehen, nach dem Netze erzeugt werden;

Fig. 3       ein Blockdiagramm eines Verfahrens zum Berechnen der Ausgabe;

Fig. 4       ein Blockdiagramm einer Variante des Verfahrens;

Fig. 5       eine schematische Ansicht des Verfahrens; und

Fig. 6       einen Multiplexer, der für eine Hardware-Realisierung der stochastischen Rundung mit einem Pseudo-Zufallszahlen-Generator verbunden ist.

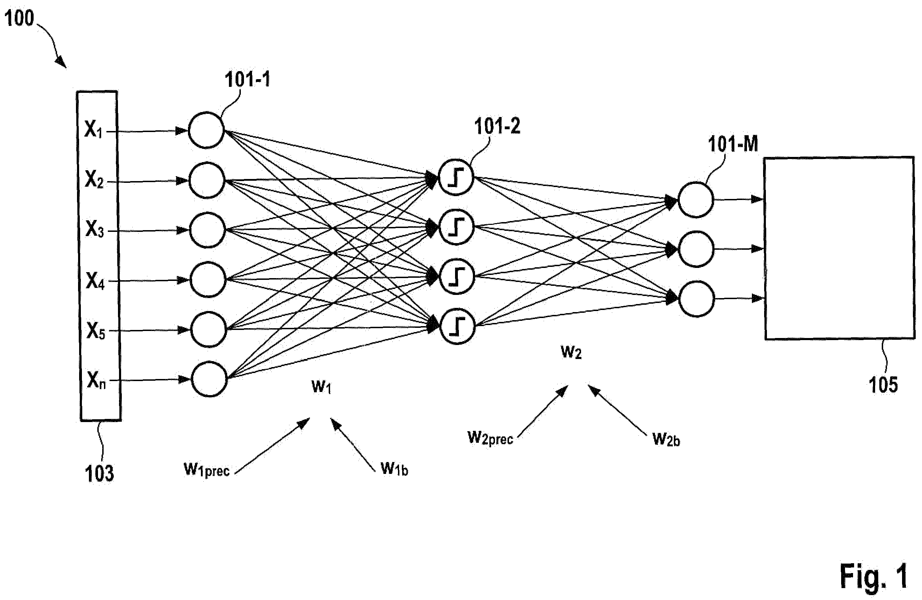

Fig. 1 zeigt einen prinzipiellen Aufbau neuronaler Netze 100. Das neuronale Netz 100 umfasst eine Eingabeschicht 101-1 (Input Layer), ein oder mehrere verarbeitende Schichten 101-2 (Hidden Layer) und eine Ausgabeschicht 101-M (Output Layer). In die Eingabeschicht 101-1 wird ein Eingangsvektor X als Eingabedaten 103 eingegeben, wie beispielsweise Pixel eines Bildes. Die verarbeitenden Schichten 101-2 agieren als Neuronen mit Aktivierungsfunktion, wie beispielsweise einem Schwellwert (Signum-Funktion), einer Tangens-Hyperbolicus -Funktion, einer Sigmoid-Funktion oder einer ReLU-Funktion (ReLU - Rectified Linear Unit). Die Ausgabe des neuronalen Netzes 100 bezeichnet die Werte der Ausgabeschicht 101-M, die zum Beispiel durch Auswahl eines Maximalwertes zur Klassifikation der Eingabedaten herangezogen werden kann.

Bei der Weiterleitung des Eingangsvektors X an die nachfolgende verarbeitende Schicht 101-2 werden die jeweiligen Komponenten des Eingangsvektors X mit entsprechenden Kantengewichten $w$ multipliziert. Dies geschieht ebenfalls bei jeder Weiterleitung an eine nachfolgende Schicht 101-M. Die Kantengewichte $w$ einer Schicht 101-1, ..., 101-M sind hochpräzise Kantengewichte $w_{prec}$, wie beispielsweise Fließkommazahlen, oder stochastisch projizierte Werte $w_b$, wie beispielsweise auf eine Ganzzahl gerundete Werte. Diese Vorwärtsprozessierung der Eingangsdaten durch das neuronale Netz wird als Forward-Propagation bezeichnet.

Neuronale Netze 100 mit Kantengewichten $w$ in einer hochpräzisen Darstellungsform, wie beispielsweise einer 32-bit-Fließkommaform, liefern eine gute Performanz im Sinne einer niedrigen Aussagenfehlerrate bei den Ausgabedaten 105. Diese neuronalen Netze 100 können mithilfe eines Projektionsverfahrens auf diskrete Werte, wie beispielsweise +1 oder -1, in diskretisierte neuronale Netze mit Kantengewichten $w_b$ überführt werden. Dadurch verschlechtert sich allerdings die Aussagenfehlerrate des neuronalen Netzes 100.

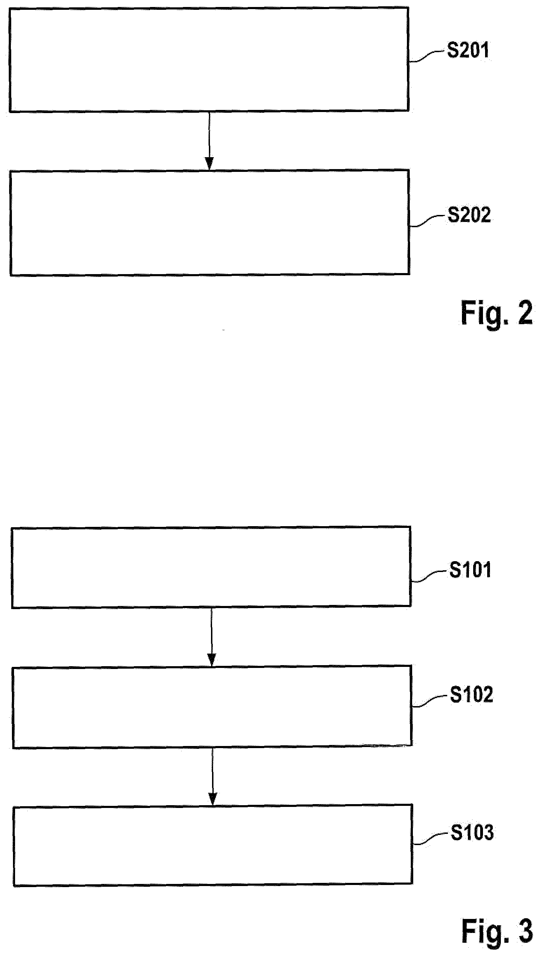

Fig. 2 zeigt ein Vorgehen, mit dem neuronale Netze 100 erzeugt werden können. In Schritt S201 wird das neuronale Netz 100 zunächst mit Wertebereichsbeschränkung der Kantengewichte (Clipping) und diskretisierender Projektion trainiert. In Schritt S202 wird als Ergebnis ein neuronales Netz 100 mit hochpräzisen Kantengewichten $w_{prec}$ erhalten, die sich unter geringen Performanzeinbußen auf diskrete Werte $w_b$ projizieren lassen.

Eine Abbildungsmethode für die Projektion von $w_{prec}$ auf $w_b$ ist ein Clipping von $w_{prec}$ auf das Intervall [-1, +1], das von stochastischem Runden gefolgt wird. Stochastisches Runden bedeutet in diesem Fall, dass ein Wert auf die nächstgelegene ganze Zahl mit einer Wahrscheinlichkeit $p$ gerundet wird, die vom Abstand zu dieser Zahl abhängt. Mit der Wahrscheinlichkeit $(1-p)$ wird die Zahl auf die in entgegengesetzter Richtung liegende nächste Ganzzahl gerundet.

Die angegebene Funktion $sround(w)$ verdeutlicht das stochastische Runden.

$$sround(w) = \begin{cases} \lceil w \rceil, & mit\ W'keit\ p = \left| \dfrac{\lfloor w \rfloor - w}{\lfloor w \rfloor - \lceil w \rceil} \right| \\[2em] \lfloor w \rfloor, & mit\ W'keit\ 1 - p = \left| \dfrac{\lceil w \rceil - w}{\lfloor w \rfloor - \lceil w \rceil} \right| \end{cases}$$

Das stochastische Runden kann beispielsweise dazu verwendet werden, kontinuierliche Werte sowohl auf zwei diskrete Werte zu binarisieren, als auch auf drei oder mehr Werte zu projizieren, wie beispielsweise von [-1, +1] auf -1,0 und +1. Im Folgenden wird deshalb von einem Diskretisieren oder einem Quantisieren gesprochen.

Fig. 3 zeigt ein Blockdiagramm des Verfahrens zum Berechnen der Ausgabe 105 mittels des neuronalen Netzes 100. Das Verfahren umfasst den Schritt S101 eines Erzeugens eines ersten neuronalen Netzes mit diskreten Kantengewichten $w_b$ aus dem neuronalen Netz 100 mit präzisen Kantengewichten $w_{prec}$ durch stochastisches Runden; und den Schritt S102 eines Erzeugens eines zweiten neuronalen Netzes mit diskreten Kantengewichten $w_b$ aus dem neuronalen Netz 100 mit präzisen Kantengewichten $w_{prec}$ durch stochastisches Runden. Anschließend wird in Schritt S103 eine Ausgabe durch Addieren der Ausgabe des ersten neuronalen Netzes und des zweiten neuronalen Netzes berechnet.

Erfindungsgemäß werden noch weitere neuronale Netze mit diskreten Kantengewichten $w_b$ erzeugt, die anschließend bei der Addition berücksichtigt werden. Dadurch lässt sich eine Genauigkeit der resultierenden Ausgabe steigern.

Das Verfahren wird durch eine Vorrichtung ausgeführt, die eingerichtet ist, die Verfahrensschritte auszuführen. Diese Vorrichtung ist in einer Mischform aus Hardware und Software implementiert, beispielsweise in einer anwendungsspezifischen integrierten Schaltung (ASIC - Application-specific Integrated Circuit) und einem Computer.

Zwischenergebnisse bei der Berechnung der Ausgabe des ersten neuronalen Netzes können in einem Speicher zwischengespeichert werden. Bei der Berechnung der Ausgabe des zweiten neuronalen Netzes können diese Zwischenergebnisse dann teilweise wiederverwendet werden. Dies ist beispielsweise dann der Fall, wenn eine Berechnung für das zweite neuronale Netz auf den gleichen diskreten Kantengewichten beruhen würde. Dadurch kann eine erneute Durchführung der Rechenoperationen unterbleiben und die Geschwindigkeit verbessert und Energieverbrauch gesenkt werden. Beispielsweise ist eine Wiederverwendung ebenfalls dann möglich, wenn die Wahrscheinlichkeit gering oder gleich Null ist, dass bei einer zweiten Berechnung ein Wert vor einer Aktivierungsfunktion sich zwar ändert, die Aktivierungsfunktion diese Änderung aber nicht zu weiteren verarbeitenden Schichten propagieren wird. Dies ist insbesondere bei sättigenden Aktivierungsfunktionen der Fall, wie beispielsweise der Signum-Funktion, Tangens-Hyperbolicus-Funktion etc.

Das stochastische Runden wird erfindungsgemäß mithilfe von Pseudo-Zufallszahlen-Generatoren hardwaretechnisch realisiert. Durch die Verwendung von N-zu-1-Bit-Multiplexern können Kantengewichte in Bitströme übersetzt werden. Dadurch wird es möglich, in einem einzigen Taktschritt ein Kantengewicht, das an einen Eingang des Multiplexers mit einer Breite von N Bit angelegt wird, stochastisch zu Null oder Eins zu runden. Ein potentielles Vorzeichen wird direkt übertragen, da es für den Rundungsvorgang keine Rolle spielt. Dieses Verfahren lässt sich beispielsweise mithilfe von 8-zu-1-Multiplexern für 8-Bit-Eingangsbitbreiten umsetzen. Das Verfahren ist daher für die Kombination mit diskretisiert trainierten Netzen geeignet.

Durch das Verfahren können Performanzeinbußen, die sich aus der auf wenige quantisierte Werte projizierten Darstellungsform des neuronalen Netzes 100 ergeben, überkompensiert werden und gleichzeitig die Vorteile einer stark quantisierten Netzdarstellung beibehalten werden. Zudem kann durch Vorauswahl der zu quantisierenden Schichten flexibel auf die vorliegende Netztopologie eingegangen werden.

Ein weiterer technischer Vorteil ist, dass durch die Art der Prozessierung des neuronalen Netzes, die Ausgabe 105 des Netzes mit der Anzahl der in die Addition einbezogenen stochastisch diskretisierten Netze zuverlässiger wird, d. h. mit höherer Konfidenz getroffen wird.

Beispielsweise kann für eine unkritische Anwendung die Ausgabe 105 des neuronalen Netzes 100 nach nur einem Prozessierungsschritt herangezogen werden, während für kritische Anwendungen Schlüsse nicht endgültig oder noch gar nicht nach bereits einem Prozessierungsschritt getroffen werden. Der Prozessierungsschritt bezeichnet hierbei die stochastische Projektion der präzisen Kantengewichte $w_{prec}$ auf diskrete Werte $w_b$ und die Evaluation der Eingangsdaten 103 mithilfe des neuronalen Netzes 100 mit ebendiesen Kantengewichte $w_b$.

Die Kantengewichte $w_{prec}$ des neuronalen Netzes 100 können während des Trainings auf ein Intervall oder einen Wertebereich beschränkt werden. Zudem können die präzisen Kantengewichte $w_{prec}$ bei einer Forward-Propagation innerhalb des neuronalen Netzes 100 im Training stochastisch auf diskrete Werte $w_b$ projiziert werden. Die während einer Back-Propagation berechneten Gradienten passen wiederum die nicht-quantisierten, das heißt die präzisen Kantengewichte $w_{prec}$ an.

Bei einer Inferenz der neuronalen Netze 100 werden die Kantengewichte $w_{prec}$ stochastisch auf diskrete Werte $w_b$ projiziert, anschließend wird eine Forward-Propagation ausgeführt und danach wird eine Ausgabe der Ausgabeschicht 101-M, die in diesem Fall kein Soft-Max-Layer sein muss, in einem Zwischenspeicher vorgehalten. Der Zwischenspeicher kann beispielsweise ein RAM oder Cache-Speicher eines Prozessors sein.

Danach wird die stochastische Projektion mit anschließender Forward-Propagation erneut ausgeführt und das neue Ergebnis auf das im Zwischenspeicher gehaltene Ergebnis addiert. Gegebenenfalls wird dieses Vorgehen, das eine stochastische Projektion, Forward-Propagation und Addition umfasst, mehrmals ausgeführt oder mithilfe von parallelen Recheneinheiten gleichzeitig ausgeführt.

Um festzustellen, unter welchen Bedingungen wie lange akkumuliert oder addiert werden sollte, kann auf einem Testdatensatz die Performanz des präzisen neuronalen Netzes 100 bestimmt und die Performanz des vorgeschlagenen Verfahrens für verschiedene Akkumulationslängen evaluiert werden.

Bei einer Akkumulationslänge von sechs übersteigt das Verfahren im Mittel bereits die Performanz des präzisen neuronalen Netzes 100 mit 32-bit-Fließkommazahlen positiv. Die stochastische Projektion kann zu Implementierungszwecken bereits vorab ausgeführt werden und die entsprechenden Netzgewichte $w_b$ abgelegt werden, die dann nacheinander oder gleichzeitig bei der Inferenz abgerufen werden und die Ergebnisse addiert werden.

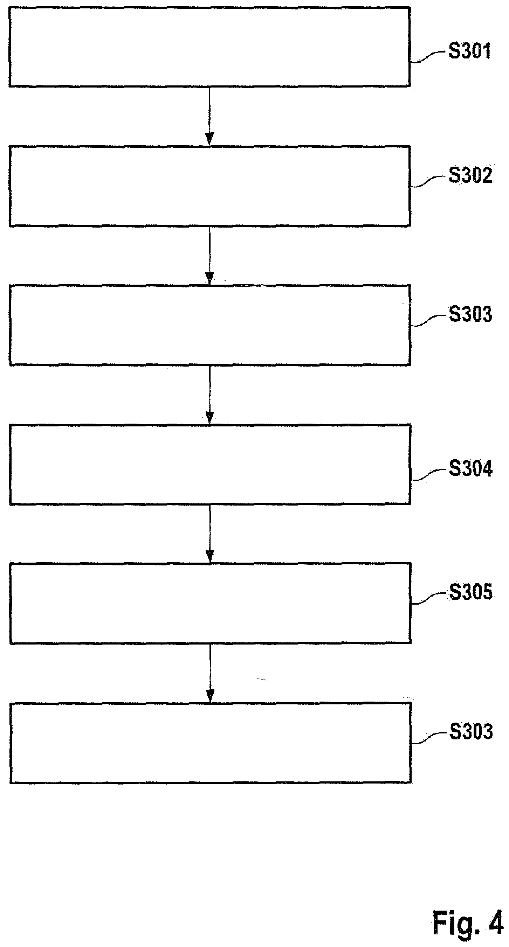

Eine Variante des Verfahrens bezieht in die stochastische Projektion nur ausgewählte Schichten 101-M ein. Dies hat zum einen den Vorteil, dass flexibel auf die Vorgaben der Netzreduktion und der Rechenkomplexitätsminimierung eingegangen werden kann und dabei gleichzeitig die Performanzanforderungen eingehalten werden können. Fig. 4 zeigt ein Blockdiagramm des Verfahrens zum Berechnen der Ausgabe 105 mittels des neuronalen Netzes 100. Das Verfahren umfasst den Schritt S301 eines Erzeugens eines ersten neuronalen Netzes mit diskreten Kantengewichten

$w_b$ aus dem neuronalen Netz 100 mit präzisen Kantengewichten $w_{prec}$ durch stochastisches Runden; den Schritt S302 der Forward-Propagation der Eingangsdaten 103 durch das erste neuronale Netz; den Schritt S303 der Entscheidung welcher Zwischenergebnisse bei einer weiteren Berechnung wiederverwendet werden können; den Schritt S304 des Erzeugens eines zweiten neuronalen Netzes mit diskreten Kantengewichten $w_b$ aus dem neuronalen Netz 100 mit präzisen Kantengewichten $w_{prec}$ durch stochastisches Runden; und den Schritt S305 der Forward-Propagation der Eingangsdaten 103 durch das zweite neuronale Netz unter Berücksichtigung der Zwischenergebnissen der Berechnung des ersten neuronalen Netzes. Anschließend wird in Schritt S306 eine Ausgabe durch Addieren der Ausgabe des ersten neuronalen Netzes und des zweiten neuronalen Netzes berechnet.

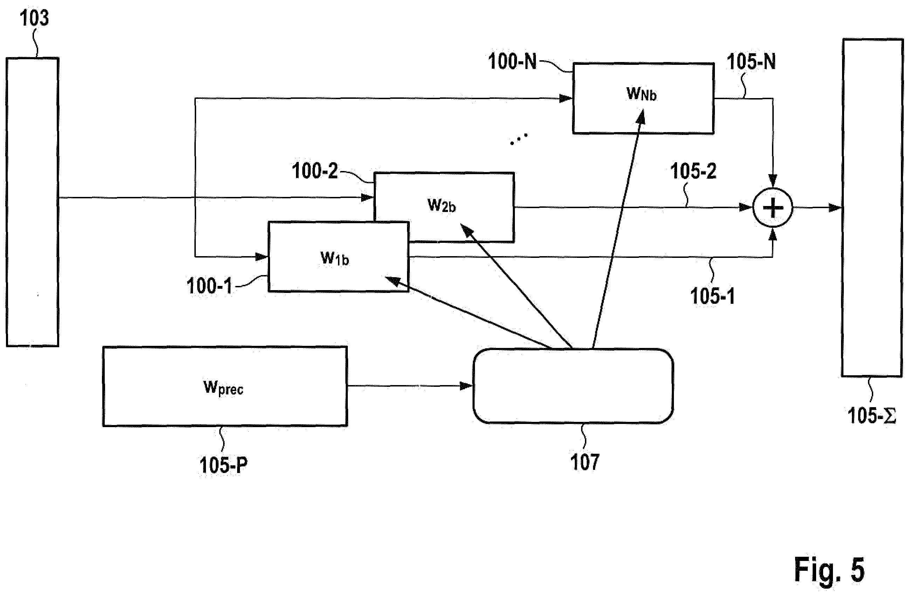

Fig. 5 zeigt eine schematische Ansicht des Verfahrens. Die präzisen Kantengewichte $w_{prec}$ des neuronalen Netzes 100-P werden N-mal durch stochastisches Runden 107 auf diskrete Kantengewichte $w_{xb}$ projiziert. Das Erzeugen der neuronalen Netze 100-1 bis 100-N kann seriell oder parallel in einer Zeit ausgeführt werden. Dadurch wird eine Anzahl neuronaler Netze 100-1, ..., 100-N mit teilweise unterschiedlichen diskreten Kantengewichten $w_{xb}$ erhalten. Die Eingangsdaten 103 werden mit den neuronalen Netzen 100-1, ..., 100-N in Ausgabedaten 105-1, 105-2, ...,105-N prozessiert.

Die hier gewonnenen einzelnen Ausgabedaten 105-x der neuronalen Netze 100-1, ..., 100-N werden addiert und als Gesamtausgabe 105-Σ des neuronalen Netzes 100 betrachtet, um darauf beispielsweise eine Klassifikation der Eingangsdaten 103 durchzuführen.

Da die mehrfache stochastische Projektion und Ausführung des neuronalen Netzes 100 nacheinander oder parallel und mit der gleichen oder einer unterschiedlichen Gewichtung gerechnet werden kann, kann flexibel auf Ressourcenvorgaben, wie beispielsweise Echtzeitgrenzen und Anzahl und Größe von Hardwarebeschleunigern, eingegangen werden. Durch das Verfahren wird einer Performanzeinbuße unter Wahrung der Vorteile entgegengewirkt, die sich aus der diskretisierten, d.h. auf wenige Werte projizierten, Darstellung des neuronalen Netzes 100 ergeben, wie beispielsweise die Vermeidung von Multiplikationen bei Kantengewichten, die nur aus +1 und -1 oder +1, -1 und 0 bestehen.

In diesem Verfahren sind die Kantengewichte $w_{prec}$ des hochpräzisen Netzes 100-P durch ein Training ermittelt und seither fest, das heißt für alle stochastischen Rundungsschritte gleich. Die Kantengewichte der quantisierten Netze unterscheiden sich durch den stochastischen Charakter der Projektion von $w_{prec}$ auf $w_b$.

Das Verfahren ist durch ein Computerprogramm mit Softwarecodeabschnitten implementiert, das in den Speicher eines digitalen Computers geladen werden kann. Der Computer umfasst einen Speicher zum Speichern des Computerprogramms und weiterer Daten, wie beispielsweise der Kantengewichte und der Topologie des neuronalen Netzes 100. Ein Prozessor des Computers greift auf das im Speicher gespeicherte Computerprogramm zu und führt das Computerprogramm aus. Hierbei ist das Verfahren durch einen Computer mit einem als Hardwareschaltung gebildeten und als Pseudo-Zufallszahlen-Generator ausgestalteten Multiplexer implementiert. Das Computerprogramm kann auf einem maschinenlesbaren Speichermedium, wie beispielsweise einer Compact Disk oder einem USB-Stick, in digitaler Form gespeichert sein.

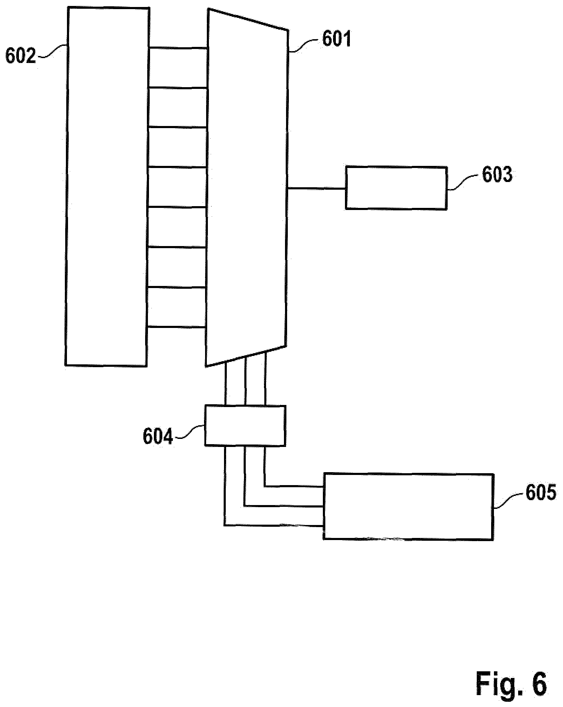

Fig. 6 zeigt schematisch einen 8-zu-1-Bit-Multiplexer 601, der in Abhängigkeit von einem Select-Signal 604 ein Bit eines Eingangsbitvektors 602 zum Ausgang 603 leitet und damit eine hardwaretechnische Realisierung der stochastischen Rundung ermöglicht. Versteht man den Eingangsbitvektor als eine binäre Festkommazahl $Z_b=0.b_8b_7b_6b_5b_4b_3b_2b_1$ mit einem höchstwertigen Bit $b_8$ und einem niedrigwertigsten Bit $b_1$, dann lässt sich eine Zahl Z in einem Intervall [0, 1] mit einem maximalen Quantisierungsfehler von $2^{-8}$ als $Z_b$ repräsentieren. Legt man einen Eingangsbitvektor 602, der $Z_b$ und damit Z repräsentiert, an den Multiplexer an und wählt ein Select-Signal 604 derart, dass die Wahrscheinlichkeit ein Bit $b_x$ vom Eingang zum Ausgang *out* 603 zu leiten gleich *P(out=$b_x$)* ist:

$$P(out = b_x) = \frac{2^{x-1}}{2^8 - 1},$$

so entspricht der Ausgang out 603 einem Ergebnis der stochastischen Rundung des Eingangsbitvektors respektive der Festkommazahl $Z_b$ und ermöglicht so eine Annäherung für *out=sround(Z)*.

Zur Erzeugung des Select-Signals 604 mit der Auswahlwahrscheinlich *P(out=$b_x$)* kann ein Pseudo-Zufallszahlen-Generator 605 eingesetzt werden. Beispielsweise ist dieser für einen 8-zu-1 -Multiplexer so konfiguriert, dass dieser ein 3-Bit-Select-Signal $s_3s_2s_1$ liefert, wobei jede Bit-Select-Leitung $s_y$ mit der Wahrscheinlichkeit *P($s_y$=1)* gleich 1 ist:

$$P\left(s_y = 1\right) = \frac{2^{2^{y-1}}}{2^{2^{y-1}} + 1}.$$

Gemäß gängiger Konvention leitet ein Select-Signal ($s_3s_2s_1$) "000" das niederwertigste Eingangsbit $b_1$ zum Ausgang. Damit ergibt sich in der Gesamtschau die genannte Auswahlwahrscheinlichkeit $P(out=b_x)$ und entsprechend hängt die Wahrscheinlichkeit $P(out=1)$ direkt vom Eingangsvektor und damit von Z ab.

Der Schutzbereich der vorliegenden Erfindung ist durch die Ansprüche gegeben und wird durch die in der Beschreibung erläuterten oder den Figuren gezeigten Merkmale nicht beschränkt.

**Patentansprüche**

1. Verfahren zum Berechnen einer Ausgabe (105) eines neuronalen Netzes (100), mit den Schritten:

   - Erzeugen (S101), durch einen Computer, eines ersten neuronalen Netzes (100-1) mit diskreten Kantengewichten ($w_{1b}$) aus einem neuronalen Netz (100) mit präzisen Kantengewichten ($w_{prec}$) durch stochastisches Runden mittels eines als Hardware-Schaltung gebildeten und als Pseudo-Zufallszahlen-Generator ausgestalteten Multiplexers (601);
   - Erzeugen (S102), durch einen Computer, eines zweiten neuronalen Netzes (100-2) mit diskreten Kantengewichten ($w_{2b}$) aus dem neuronalen Netz (100) mit präzisen Kantengewichten ($w_{prec}$) durch stochastisches Runden mittels des als Hardware-Schaltung gebildeten und als Pseudo-Zufallszahlen-Generator ausgestalteten Multiplexers (601); und
   - Berechnen (S103) einer Ausgabe durch Addieren der Ausgabe des ersten neuronalen Netzes (100-1) und des zweiten neuronalen Netzes (100-2), wobei, beim stochastischen Runden, weitere neuronale Netze (100-N) mit diskreten Kantengewichten ($w_{Nb}$) auf Basis einer Genauigkeitsanforderung der Ausgabe aus dem neuronalen Netz (100) mit präzisen Kantengewichten ($w_{prec}$) erzeugt und bei der Addition berücksichtigt werden.

2. Verfahren nach Anspruch 1, wobei bei einem Berechnen der Ausgabe des zweiten neuronalen Netzes (100-2) auf bei dem Berechnen des ersten neuronalen Netzes (100-1) berechnete Zwischenergebnisse zurückgegriffen wird.

3. Verfahren nach einem der vorangehenden Ansprüche, wobei die präzisen Kantengewichte ($w_{prec}$) bei einer Forward-Propagation stochastisch auf die diskreten Kantengewichte ($w_b$) des ersten und/oder zweiten neuronale Netzes (100-1, 100-2) projiziert werden.

4. Verfahren nach einem der vorangehenden Ansprüche, wobei die Ausgabe des ersten neuronalen Netzes (100-1) und/oder des zweiten neuronalen Netzes (100-2) in einem Zwischenspeicher gespeichert wird.

5. Verfahren nach Anspruch 4, wobei der Zwischenspeicher ein RAM oder Cache-Speicher eines Prozessors oder eines dedizierten Hardwarebeschleunigers ist.

6. Verfahren nach einem der vorangehenden Ansprüche, wobei bei der Erzeugung des ersten oder zweiten neuronalen Netzes (100-1, 100-2) lediglich die präzisen Kantengewichte ($w_{prec}$) vorausgewählter Schichten (101-2) auf diskrete Kantengewichte ($w_b$) projiziert werden.

7. Computerprogramm, das in den Speicher eines digitalen Computers geladen werden kann und das Softwarecodeabschnitte umfasst, mit denen das Verfahren nach einem der Ansprüche 1 bis 6 durch den Computer mit einem als Hardware-Schaltung gebildeten und als Pseudo-Zufallszahlen-Generator ausgestalteten Multiplexer (601) ausgeführt wird, wenn das Computerprogramm auf dem Computer läuft.

8. Maschinenlesbares Speichermedium, auf dem das Computerprogramm nach Anspruch 7 gespeichert ist.

9. Vorrichtung, umfassend einen Computer mit einem als Hardware-Schaltung gebildeten und als Pseudo-Zufallszahlen-Generator ausgestalteten Multiplexer (601), wobei die Vorrichtung eingerichtet ist, das Verfahren nach einem der Ansprüche 1 bis 6 auszuführen.

10. Verwendung des Verfahrens nach einem der Ansprüche 1 bis 6 in einem Steuergerät eines Fahrzeugs, in einem Steuergerät eines wenigstens teilautonom fahrenden Fahrzeugs, in einem Steuergerät zur Steuerung eines Planungsverfahren, Fertigungsverfahrens, Produktionverfahrens und/oder Logistikverfahrens und/oder in einem Steuergerät eines elektronischen und/oder elektromechanischen Werkzeugs, wobei das Steuergerät einen Computer mit einem als Hardware-Schaltung gebildeten und als Pseudo-Zufallszahlen-Generator ausgestalteten Multiplexer (601) umfasst, wobei der Computer das Verfahren ausführt.

**Claims**

1. Method for computing an output (105) of a neural network (100), comprising the following steps:

   - a computer generating (S101) a first neural network (100-1) having discrete edge weights ($w_{1b}$) from a neural network (100) having precise edge weights ($w_{prec}$) through stochastic rounding by way of a multiplexer (601) formed as a hardware circuit and designed as a pseudorandom number generator;
   - a computer generating (S102) a second neural network (100-2) having discrete edge weights ($w_{2b}$) from the neural network (100) having precise edge weights ($w_{prec}$) through stochastic rounding by way of the multiplexer (601) formed as a hardware circuit and designed as a pseudorandom number generator; and
   - computing (S103) an output by adding the output of the first neural network (100-1) and of the second neural network (100-2), wherein, during the stochastic rounding, further neural networks (100-N) having discrete edge weights ($w_{Nb}$) are generated on the basis of an accuracy requirement for the output from the neural network (100) having precise edge weights ($w_{prec}$) and taken into consideration in the addition.

2. Method according to Claim 1, wherein, when computing the output of the second neural network (100-2), intermediate results computed during the computing of the first neural network (100-1) are used.

3. Method according to either of the preceding claims, wherein the precise edge weights ($w_{prec}$), in a forward propagation, are projected stochastically onto the discrete edge weights ($w_b$) of the first and/or second neural network (100-1, 100-2).

4. Method according to one of the preceding claims, wherein the output of the first neural network (100-1) and/or of the second neural network (100-2) is stored in a buffer memory.

5. Method according to Claim 4, wherein the buffer memory is a RAM or cache memory of a processor or of a dedicated hardware accelerator.

6. Method according to one of the preceding claims, wherein, during the generation of the first or second neural network (100-1, 100-2), only the precise edge weights ($w_{prec}$) of preselected layers (101-2) are projected onto discrete edge weights ($w_b$).

7. Computer program able to be loaded into the memory of a digital computer and comprising software code sections by way of which the method according to one of Claims 1 to 6 is carried out by the computer having a multiplexer (601) formed as a hardware circuit and designed as a pseudorandom number generator when the computer program runs on the computer.

8. Machine-readable storage medium on which the computer program according to Claim 7 is stored.

9. Device comprising a computer having a multiplexer (601) formed as a hardware circuit and designed as a pseudorandom number generator, wherein the device is configured to carry out the method according to one of Claims 1 to 6.

10. Use of the method according to one of Claims 1 to 6 in a controller of a vehicle, in a controller of an at least partially self-driving vehicle, in a controller for controlling a planning process, manufacturing process, production process and/or logistics process and/or in a controller of an electronic and/or electromechanical tool, wherein the controller comprises a computer having a multiplexer (601) formed as a hardware circuit and designed as a pseudorandom number generator, wherein the computer carries out the method.

**Revendications**

1. Procédé de calcul d'une sortie (105) d'un réseau neuronal (100), ledit procédé comprenant les étapes suivantes :

   - générer (S101), par le biais d'un ordinateur, un premier réseau neuronal (100-1) ayant des poids de bord discrets ($w_{1b}$) à partir d'un réseau neuronal (100) ayant des poids de bord précis ($w_{prec}$) par un processus d'arrondi stochastique réalisé au moyen d'un multiplexeur (601) conçu comme un générateur de nombres pseudo-aléatoires et se présentant sous la forme d'un circuit matériel ;
   - générer (S102), par le biais d'un ordinateur, un deuxième réseau neuronal (100-2) ayant des poids de bord discrets ($w_{2b}$) à partir du réseau neuronal (100) ayant des poids de bord précis ($w_{prec}$) par un processus d'arrondi stochastique réalisé au moyen du multiplexeur (601) conçu comme un générateur de nombres pseudo-aléatoires et se présentant sous la forme d'un circuit matériel ; et
- calculer (S103) une sortie par un processus d'addition de la sortie du premier réseau neuronal (100-1) et de celle du deuxième réseau neuronal (100-2), d'autres réseaux neuronaux (100-N) ayant des poids de bord discrets ($w_{Nb}$) étant générés, pendant le processus d'arrondi stochastique, sur la base d'une exigence de précision de la sortie du réseau neuronal (100) ayant des poids de bord précis ($w_{prec}$) et étant pris en compte en compte lors de l'addition.

2.  Procédé selon la revendication 1, un accès à des résultats intermédiaires, qui ont été calculés lors du calcul du premier réseau neuronal (100-1), étant effectué lors d'un calcul de la sortie du deuxième réseau neuronal (100-2).

3.  Procédé selon l'une des revendications précédentes, les poids de bord précis ($w_{prec}$) étant projetés de manière stochastique sur les poids de bord discrets ($w_b$) du premier et/ou du deuxième réseau neuronal (100-1, 100-2) lors d'une propagation vers l'avant.

4.  Procédé selon l'une des revendications précédentes, la sortie du premier réseau neuronal (100-1) et/ou du deuxième réseau neuronal (100-2) étant mémorisée dans une mémoire tampon.

5.  Procédé selon la revendication 4, la mémoire tampon étant une RAM ou une mémoire cache d'un processeur ou d'un accélérateur matériel dédié.

6.  Procédé selon l'une des revendications précédentes, seuls les poids de bord précis ($w_{prec}$) des couches présélectionnées (101-2) étant projetés sur des poids de bord discrets ($W_b$) lors de la génération du premier ou du deuxième réseau neuronal (100-1, 100-2).

7.  Logiciel pouvant être chargé dans la mémoire d'un ordinateur numérique et comprenant des portions de code logiciel avec lesquelles le procédé selon l'une des revendications 1 à 6 peut être mis en œuvre par l'ordinateur avec un multiplexeur (601) conçu comme un générateur de nombres pseudo-aléatoires et se présentant sous la forme d'un circuit matériel, lorsque le logiciel est exécuté sur l'ordinateur.

8.  Support de stockage lisible par machine sur lequel est stocké le logiciel selon la revendication 7.

9.  Dispositif comprenant un ordinateur pourvu d'un multiplexeur (601) conçu comme un générateur de nombres pseudo-aléatoires et se présentant sous la forme d'un circuit matériel, le dispositif étant conçu pour mettre en œuvre le procédé selon l'une des revendications 1 à 6.

10. Utilisation du procédé selon l'une des revendications 1 à 6 dans une unité de commande d'un véhicule, dans une unité de commande d'un véhicule au moins partiellement autonome, dans une unité de commande destinée à commander un procédé de planification, un procédé de fabrication, un procédé de production et/ou un procédé logistique et/ou dans une unité de commande d'un outil électronique et/ou électromécanique, l'unité de commande comprenant un ordinateur pourvu d'un multiplexeur (601) conçu comme un générateur de nombres pseudo-aléatoires et se présentant sous la forme d'un circuit matériel, l'ordinateur mettant en œuvre le procédé.

Fig. 1

Fig. 2

Fig. 3

Fig. 4

Fig. 5

103

100-N    105-N

$W_{Nb}$

100-2    105-2

$W_{2b}$

100-1

$W_{1b}$

105-1

+

$W_{prec}$

105-P

107

105-Σ

EP 3 542 313 B1

13

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4404974 C1
- DE 10317384 A1
- US 5926804 A
- US 6064997 A

**In der Beschreibung aufgeführte Nicht-Patentliteratur**

- Deep Learning with Limited Numerical Precision. **SUYOG GUPTA et al.** ARXIV.ORG. CORNELL UNIVERSITY LIBRARY, 09. Februar 2015, 14853
- **DRUCKSCHRIFT M. COURBARIAUX ; Y. BENGIO ; J.-P. DAVID.** BinaryConnect: Training Deep Neural Networks with Binary Weights During Propagations. *Annual Conference on Neural Information Processing Systems,* 2015